# EUROPÄISCHE PATENTANMELDUNG

(11) **EP 0 598 194 A1**
(43) Veröffentlichungstag der Anmeldung: **25.05.1994**
(21) Anmeldenummer: 93114249.1
(22) Anmeldetag: 06.09.1993
(51) Int. Cl.: H01M 10/34, H01M 10/50

(54) **Metalloxid-Wasserstoffbatterie hoher Kapazität**

(30) Priorität: 11.11.1992 DE 4238053
(71) Anmelder: VARTA Batterie Aktiengesellschaft, D-30419 Hannover (DE)
(72) Erfinder: Hoge, Detlev, Dr., D-38518 Gifhorn (DE); Sprengel, Dietrich, Dr., D-58553 Halver (DE)
(74) Vertreter: Kaiser, Dieter Ralf, Dipl.-Ing.

(57) **Zusammenfassung**

Eine Metalloxid-Wasserstoffbatterie hoher Kapazität wird durch eine Vielzahl miteinander parallel verschalteter positiver und negativer Elektroden gebildet, die in einem gemeinsamen Zellgefäß (1) als Batteriegehäuse stapelförmig angeordnet sind und die sämtlich mit dem gleichen Elektrolyten in Kontakt stehen, wobei in bestimmten Abständen a zwischen die separierten Elektroden eingefügte elektrolytdurchlässige Querwände (6) aus Stahlblech, die mit den Gehäuseaußenwänden fest verbunden sind, der Wärmeableitung und der Stabilität des Gehäuses dienen. Vorzugsweise sind die von zwei Querwänden jeweils eingegrenzten Teilstapel die bereits vormontierten und mit Polbrücken 7,7' und Polen 8,8' komplettierten Plattenpakete von kleinen prismatischen Standardzellen.

## Beschreibung

Die Erfindung betrifft eine Metalloxid-Wasserstoffbatterie hoher Kapazität, insbesondere Nickel-Hydridbatterie, mit einem geschlossenem prismatischen Gehäuse.

Handelsübliche Akkumulatoren des Ni/Cd-Systems sowie die erst in jüngster Zeit eingeführten Nickel-Hydridbatterien sind mehrheitlich Wickelzellen und besitzen dementsprechend ein zylindrisches Gehäuse.

Ihre Anwendung in batteriebetriebenen Geräten aller Art ist jedoch selten optimal, weil der für die Unterbringung der Batterien vorgesehene Raum einen rechteckigen Umriß aufweist, der mit zylinderförmigen Batterien nur unter erheblicher Volumenverschwendung ausgenutzt werden kann. Durch den Einsatz prismatisch geformter Zellen bzw. Batterien könnten etwa 30% des Volumens der Batteriehalterung eingespart werden. Dabei ist es leichter, die Dickenabmessung prismatischer Batterien zu verringern als diejenige von zylindrischen Batterien.

Unter Verwendung der gleichen dünnen Elektroden aus einem Bandmaterial, wie es bei Wickelzellen üblich ist -z.B. einer positiven Nickelelektrode vom Sinterfolientyp und einer negativen Elektrode aus einem Nickelgewebenetz, in das eine Wasserstoffspeicherlegierung eingewalzt ist-, gelangt man zu handlichen prismatischen Batterien, die bei geringer Tiefe (Dicke) entweder ein sehr breites oder hohes Format besitzen. Batteriezellen dieser Art lassen sich z.B. aus der US-PS 4977043 entnehmen.

Um höhere Kapazitäten verfügbar zu machen, liegt es nahe, viele solcher Zellen elektrisch parallel zu schalten. Dies zieht jedoch das Problem einer unzulässigen Erhitzung des Batteriepacks, insbesondere bei den angestrebten hohen Lade-und Entladeströmen, mit sich, wenn dessen Dicke ein bestimmtes Maß übersteigt, weil dann die unvermeidlichen Stromwärmeverluste aus dem Inneren der Batterieanordnung nicht mehr an dieUmgebung abgeführt werden können. Außerdem bereitet das Laden eines solchen Batteriepacks Schwierigkeiten, wobei u.U. jeder Parallelzweig mit vertretbarem Aufwand nur einzeln geladen werden kann.

Aufgrund von Erfahrungen mit handelsüblichen Nickel-Hydrid-Rundzellen traten bis zu Gehäusedurchmessern von 30mm (F-size-Zelle) noch keine Probleme hinsichtlich Erhitzung auf.

Von größeren Zellaggregaten sind jedoch Kühlsysteme bekannt, bei denen beispielsweise in der Nähe des gemeinsamen Gehäuses Kanäle zum Hindurchleiten eines Kühlmediums eingebracht sind (DE-PS 33 33 475), oder bei denen zwischen nachbarständigen Zellmodulen, welche in nebeneinanderliegenden Stapeln den Innenraum eines druckfesten Gehäuses ausfüllen, jeweils Wärmeleitbleche angeordnet sind. Solche Vorrichtungen lassen sich der US-PS 4957830 oder der EP-A-490597 entnehmen.

Der Erfindung liegt die Aufgabe zugrunde, eine prismatische Nickel-Hydrid-Batterie von großer Kapazitätsauslegung und einem zwangsläufig damit verbundenen hohen Volumenbedarf so einzurichten, daß unzulässig hohe Betriebstemperaturen ausgeschlossen werden und daß das Gehäuse auch unter dem Einfluß höherer Wasserstoffdrucke seine Gestaltfestigkeit beibehält.

Die Aufgabe wird erfindungsgemäß mit einer Batterie gelöst, wie sie durch Patentanspruch 1 definiert ist.

Danach hat es sich als vorteilhaft erwiesen, soviele Elektrodenplatten wie für die gewünschte Batteriekapazität erforderlich als Plattenstapel, mit wechselnder Polarität der Platten und mit zwischenliegenden Separatoren wie üblich, in einem gemeinsamen großen Zellengehäuse anzuordnen und alle positiven Platten sowie alle negativen Platten elektrisch parallel zu schalten. Sämtliche Platten stehen auf diese Weise mit dem gleichen Elektrolyten in Verbindung.

Erfindungsgemäß wird die Plattenanordnung in festen Abständen durch Gehäusezwischenwände aus einem gut wärmeleitenden Material unterbrochen, jedoch so, daß für den Elektrolyten ein freier Durchtritt gewährleistet ist. Die den Gehäusezwischenwänden jeweils benachbarten Elektroden sind dabei gegen diese durch Separatoren elektrisch isoliert.

Die Abstände, in denen die Gehäusezwischenwände einander folgen, sollten erfindungsgemäß 10mm bis 50mm, vorzugsweise ca. 30mm betragen.

Die Dicke der Zwischenwände kann zwischen 0,3mm und 1,0mm liegen.

Das Material der Gehäusezwischenwände ist vorzugsweise ein perforiertes Stahlblech, wobei die Perforierung nicht nur mit Blick auf die notwendige Elektrolytverbindung zwischen den Nachbarräumen, sondern auch aus Gründen der Gewichtsersparnis günstig ist. Für einen Elektrolytdurchtritt würde auch eine einzige Reihe von Löchern mit einem Durchmesser von z.B. 3mm über dem Zellenboden ausreichend sein.

Da den Gehäusezwischenwänden vor allem die Aufgabe zukommt, die Wärmeableitung aus dem Innern der Plattenanordnung nach außen an das Zellengehäuse zu übernehmen, ist es vorteilhaft, wenn sie die Elektroden flächendeckend abstützen, mithin großflächig ausgebildet sind und dabei dennoch dem Ausgleich der Elektrolytflüssigkeit im Innern des Zellengefäßes nicht im Wege stehen.

Für diese Doppelfunktion eignen sich anstelle von Lochblechen auch Drahtnetze, die ja ebenfalls wärmeleitend sind.

Im Prinzip genügten allein die Querdrähte eines Drahtnetzes, wenn diese zwischen den Seitenwänden des Gehäuses verspannt werden (Drahtanker). Wegen der Gefahr, daß hier die Platten leistenförmig eingedrückt werden, so daß kein flächenhafter Druck entsteht, ist diese Variante allerdings weniger günstig.

Die Befestigung der Gehäusezwischenwände, auch Querwände oder Querstege, an den metallischen Seitenwänden des Zellengehäuses kann auf mannigfache Weise durch Längsschweißen, Punktschweißen, Nieten, Klemmen, Schrauben etc. erfolgen. Es muß nur stets eine gute Wärmeableitung durch die hergestellten Kontakte gewährleistet sein.

Die Zwischenwände werden vor dem Einbau der Elektrodenplatten in das Zellengehäuse eingebracht. Dabei sollte das spätere Einführen der Elektroden nicht durch Materialaufträge in den Berührungszwickeln zwischen Querwand und Gehäusewand, etwa Führungsnasen, Schienen oder Winkelstücke als Schweißhilfen, behindert sein.

In einer besonders vorteilhaften Ausführungsform der Erfindung sind die Querwände an den gegenüberliegenden Seiten, mit denen sie an die Gehäusewände angrenzen, durch Überstände etwas über die Innenweite des Zellengehäuses hinaus verbreitert. Die ca. 1 mm betragenden Überstände korrespondieren mit vorbereiteten Schlitzen in den Gehäuse-Außenwänden, in welche sie beim Einfügen der Querwände in das Zellengehäuse wie Zinken einrasten. Danach werden die Überstände von außen ohne Materialbeigabe schutzgasgeschweißt.

In einer einfacheren Variante werden die Querwände durch Punktschweißen an die glatten Außenwände des Zellengefäßes geschweißt. Hierzu ist allerdings eine Zange nötig, die während des Schweißvorganges die Querwand festhält und gleichzeitig der Stromeinspeisung für die Schweißung dient.

Anhand zweier Figuren wird der Gegenstand der Erfindung in einer bevorzugten Ausführungsform verdeutlicht.

Figur 1 zeigt ein mit Elektrodenplatten beschicktes Batteriegehäuse gemäß der Erfindung.

Figur 2 zeigt Einzelheiten der Befestigung von Gehäusezwischenwänden an der Gehäuse-Außenwand.

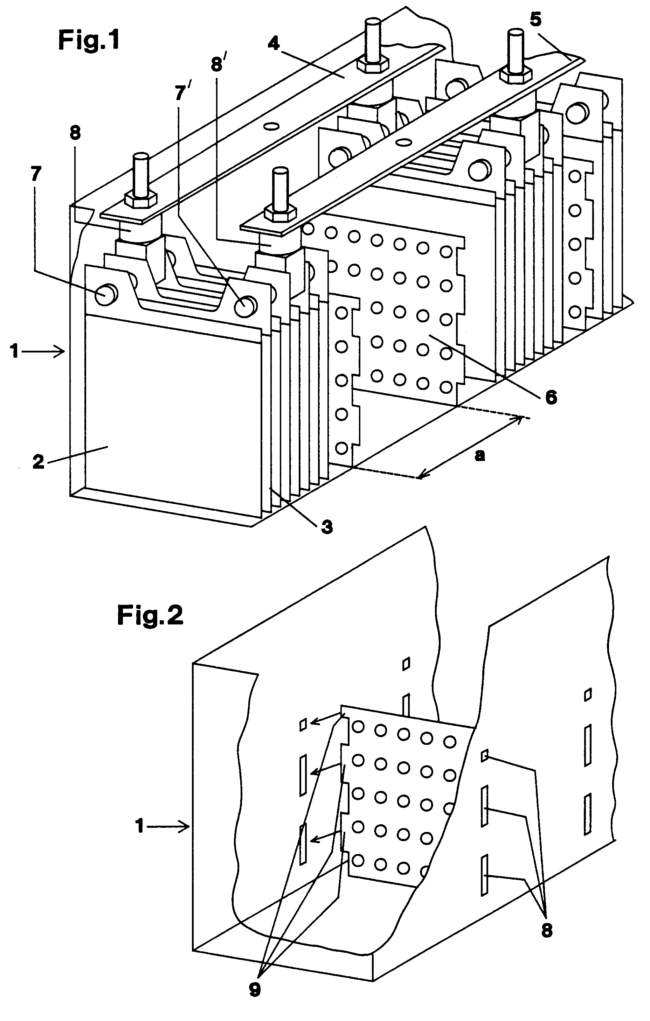

Gemäß Figur 1 ist das Zellengefäß 1 mit positiven Nickel-Hydroxidelektroden 2 und negativen Elektroden 3 auf der Basis einer Wasserstoffspeicherlegierung in stapelförmiger Anordnung beschickt, wobei alle positiven Elektroden über eine Stromschiene 4 und alle negativen Elektroden über eine Stromschiene 5 parallel geschaltet sind und sämtliche Elektroden mit dem gemeinsamen alkalischen Elektrolyten in Kontakt stehen. Dieser ist im wesentlichen von den Separatoren festgehalten, die aus Übersichtsgründen nicht dargestellt sind.

Jeweils in Abständen a, die vorzugsweise 30mm betragen, sind zwischen den Elektroden wärmeleitende Lochbleche 6 angeordnet, die als Gehäusezwischenwände den Wärmeabfluß aus dem Zellinnern zu den Außenwänden fördern und darüber hinaus dem Batteriegehäuse, welches eine große Einzelzelle darstellt, Stabilität verleihen.

Besonders günstig aus fertigungstechnischer Sicht ist es, den Abstand a zwischen den Querwänden innerhalb des zulässigen Bereiches 10mm bis 50mm so einzurichten, daß jeder Zwischenraum gerade von soviel Elektrodenplatten ausgefüllt wird, wie für eine standardisierte kleine Nickel-Hydridzelle vorgesehen sind und als bereits vormontierte Plattenpakete zur Verfügung stehen bzw. einer Vorratshaltung entnommen werden können. In der Figur 1 sind als Beispiel vorgefertigte Plattenpakete aus je vier positiven und vier negativen Platten einschließlich Polbrücken 7,7' und Schraubpolen 8,8' dargestellt. Der Zwischenraum "a" wurde nur aus Übersichtsgründen von Elektroden freigelassen.

Die Elektrodenbeschickung der erfindungsgemäßen "großen" Zelle erfolgt also vorzugsweise paketweise mit kompletten Paketeinheiten einer handelsüblichen kleinen Zelle (Grundtyp) des jeweiligen Metalloxid-Wasserstoffbatteriesystems, wobei die jeweils gleichnamigen Pole elektrisch parallel verbunden werden. Die große Zelle verfügt dann mit n Paketeinheiten über die n-fache Kapazität der Standardzelle.

Die in Figur 2 dargestellte Montage der Gehäusezwischenwände 6 wird an dem noch leeren metallischen Zellgefäß 1 vorgenommen. Deren Seitenwände sind in gegenseitigen Abständen a mit senkrechten schlitzförmigen Aussparungen 8 versehen. Die Zwischenwäde 6 besitzen an den Seiten zinkenförmige Überstände 9, mit denen sie die Breite des Zellengefäßes beiderseits um ca. 1 mm übertreffen und die mit den schlitzförmigen Aussparungen korrespondieren. Die Überstände werden nach entsprechender Positionierung der Zwischenwand von den Schlitzen erfaßt und anschließend mit den Außenwänden durch Verschweißung fest verbunden.

Dank der Zwischenwände und trotz ihres gewichtsparenden, leicht biegefähigen Blechmaterials erhält das Zellengefäß zusätzlich eine hervorragende innere Stabilität. Darin liegt ebenfalls ein besonderer Vorteil der Erfindung, indem nunmehr auch druckfeste prismatische Metalloxid-Wasserstoffbatterien größeren Formats hergestellt werden können, für die man bisher aus Sicherheitsgründen kugelige oder zylinderförmige Gehäuse, zumeist aus legierten Stählen, verwendete.

## Patentansprüche

1. Metalloxid-Wasserstoffbatterie hoher Kapazität, insbesondere Nickel-Hydridbatterie, mit einem geschlossenen prismatischen Gehäuse, dadurch gekennzeichnet, daß das Gehäuse (1) das Zellengefäß für eine Vielzahl miteinander parallel verschalteter positiver und negativer Elektroden (2,3) bildet, die mit dem gleichen Elektrolyten in Verbindung stehen, und daß in festen Abständen (a) zwischen benachbarten Elektroden Gehäusezwischenwände (6) aus einem gut wärmeleitenden Material angeordnet sind, welche gegen die Elektroden elektrisch isoliert, für den Elektrolyten jedoch durchlässig sind.

2. Metalloxid-Wasserstoffbatterie nach Anspruch 1, dadurch gekennzeichnet, daß die Abstände der Gehäusezwischenwände 10mm bis 50mm, vorzugsweise 30mm betragen.

3. Metalloxid-Wasserstoffbatterie nach Anspruch 2, dadurch gekennzeichnet, daß die Dicke der Gehäusezwischenwände 0,3mm bis 1,0mm beträgt.

4. Metalloxid-Wasserstoffbatterie nach einem der Ansprüche 1 bis 3, dadurch gekennzeichnet, daß die Gehäusezwischenwände aus perforiertem Stahlblech gebildet sind.

5. Metalloxid-Wasserstoffbatterie nach einem der Ansprüche 1 bis 4, dadurch gekennzeichnet, daß die Gehäusezwischenwände mit den Seitenwänden des Zellgefäßes durch Punktschweißen, Längsschweißen, Nieten, Schrauben oder Klemmen verbunden sind.

6. Metalloxid-Wasserstoffbatterie nach einem der Ansprüche 1 bis 5, dadurch gekennzeichnet, daß jeder Zwischenraum zwischen zwei Gehäusezwischenwänden jeweils von einem vormontierten Elektrodenpaket ausgefüllt ist, welches die übliche Elektrodenbestückung einer kleinen prismatischen Standardzelle des betreffenden Metalloxid-Wasserstoffbatteriesystems bildet.
